# EUROPÄISCHE PATENTSCHRIFT

(11) **EP 1 767 986 B1**
(45) Veröffentlichungstag und Bekanntmachung des Hinweises auf die Patenterteilung: **09.07.2008**
(21) Anmeldenummer: 06019220.0
(22) Anmeldetag: 14.09.2006
(51) Int. Cl.: G02F 1/13357, B60K 35/00

(54) **Monochrome Anzeigevorrichtung mit einer Hintergrundbeleuchtung, Kraftfahrzeug und Verfahren zum Betreiben einer monochromen Anzeigevorrichtung**
Monochromatic display device with a backlight, motor vehicle and method for operating a monochromatic display device
Dispositif d'affichage monochromatique retroéclairé, véhicule automobile et procédé de commande du dispositif d'affichage monochromatique

(30) Priorität: 24.09.2005 DE 102005045692
(43) Veröffentlichungstag der Anmeldung: 28.03.2007
(73) Patentinhaber: GM Global Technology Operations, Inc., Detroit, MI 48265-3000 (US)
(72) Erfinder: Brandt, Peter, 63739 Aschaffenburg (DE); Böhme, Aiko, 55218 Ingelheim (DE); Charle, Heiko, 65428 Rüsselsheim (DE)
(74) Vertreter: Daniel, Ulrich W.P.

(56) Entgegenhaltungen:
- WO-A-03/107083
- DE-A1- 19 622 900

## Beschreibung

Die Erfindung betrifft eine Anzeigevorrichtung mit einer Hintergrundbeleuchtung, ein Kraftfahrzeug und ein Verfahren zum Betreiben einer Anzeigevorrichtung.

Eine hintergrundbeleuchtete monochrome Anzeigevorrichtung umfasst eine Anzeige, beispielsweise einen Flüssigkristallbildschirm (LCD), die mittels einer Hintergrundbeleuchtung hinterleuchtet wird. Um die Anzeige verschiedenfarbig zu hinterleuchten, kann die Farbe der Hintergrundbeleuchtung zwischen verschiedenen Farben umgeschaltet werden. Die Farbe wird jedoch gewöhnlich nur für die gesamte Anzeige der Anzeigevorrichtung gewechselt, sodass Teilbereiche der Anzeige nicht verschiedenfarbig hinterleuchtet werden. Es ist zwar möglich, die Hintergrundbeleuchtung in mehrere Bereiche zu unterteilen, die dann jeweils mit unterschiedlichen Farben beleuchtet werden. Um ein Überleuchten der jeweiligen unterschiedlichen Farben im Grenzbereich der verschiedenen Bereiche der Hintergrundbeleuchtung zu verhindern, werden die einzelnen Bereiche durch nicht beleuchtete Bereiche abgetrennt. Die Anzeige wird in diesen Bereichen nicht nur nicht hinterleuchtet, sondern die Bereiche sind auch als solche sichtbar. Dies erschwert das Erkennen von mit der Anzeige dargestellter Information.

Die DE 196 22 900 A1 offenbart eine Leuchtdioden-Anzeigevorrichtung mit einer Anzeigeeinrichtung und einem Gehäuse. Das Gehäuse weist einen Eintrittsbereich zum Empfangen von Licht von Leuchtdioden auf. Der Eintrittsbereich umfasst eine Reflexionsoberfläche an seiner inneren Oberfläche und die Leuchtdioden geben Licht zu einer Seite oder einem Längsende des Eintrittsbereichs ab. Eine Lichtbrechungsplatte ist vorgesehen zur direkten Abstrahlung des eintretenden Lichts.

Die WO 03/107083 A1 offenbart eine farbige LCD-Anzeige, die auf dem sogenannten Time-Divisional Verfahren beruht.

Die Aufgabe der vorliegenden Erfindung ist es daher, Vorraussetzungen für eine bessere ablesbare Anzeigevorrichtung zu schaffen.

Die Aufgabe der Erfindung wird durch eine Anzeigevorrichtung gemäß Anspruch 1 gelöst.

Dadurch ist es möglich, die beiden Bereiche mit voneinander verschiedenen Farben zu hinterleuchten und gleichzeitig die gesamte Anzeige flächenhaft zu hinterleuchten, ohne dass sich die Beleuchtungen der beiden Bereiche wenn, dann nur kaum gegenseitig beeinflussen. Somit sind Vorraussetzungen geschaffen, dass mit der erfindungsgemäßen Anzeigevorrichtung relativ einfach Informationen ablesbar sind.

Die Gefahr einer Beeinflussung der beiden Bereich lässt sich gemäß einer bevorzugten Variante der erfindungsgemäßen Anzeigevorrichtung verringern, wenn die beiden Lichtleiter durch eine lichtundurchlässige und/oder lichtreflektierende Schicht voneinander getrennt sind. Die Schicht ist beispielsweise eine dünne Folie oder kann bevorzugt mittels Farbdruck aufgebracht werden.

Wenn nach einer Ausführungsform der erfindungsgemäßen Anzeigevorrichtung als Anzeige ein Flüssigkristallbildschirm verwendet wird, dann kann die Anzeigevorrichtung relativ preisgünstig hergestellt werden.

Besonders attraktiv kann die erfindungsgemäße Anzeigenvorrichtung ausgeführt werden, wenn nach einer Variante wenigstens einer der Teillichtleiter die Form eines Symbols hat. Ein solches Symbol ist z.B. ein Markenzeichen.

Die erfindungsgemäße Anzeigenvorrichtung wird insbesondere bei einem Kraftfahrzeug, z.B. als Kombiinstrument zum Anzeigen von verschiedenen Fahrzeugparametern, verwendet. Bei der Verwendung in dem Kraftfahrzeug kann die erfindungsgemäße Anzeigevorrichtung insbesondere zum Durchführen eines Verfahrens mit folgenden Verfahrensschritten verwendet werden:
- Einkoppeln von Licht der ersten Farbe in den ersten Lichtleiter und in den zweiten Lichtleiter, die derart dicht nebeneinander hinter der Anzeige der Anzeigenvorrichtung angeordnet sind, sodass sie die gesamte Anzeige flächenhaft mit der ersten Farbe hinterleuchten, und
- Wechseln der Farbe des eingekoppelten Lichts in den zweiten Lichtleiter von der ersten Farbe auf eine von der ersten Farbe verschiedenen zweiten Farbe aufgrund eines von einer Steuereinrichtung des Fahrzeugs abgegebenen Signals, sodass ein dem ersten Lichtleiter zugeordneter Bereich der Anzeige mit der ersten Farbe und ein dem zweiten Lichtleiter zugeordneter Bereich der Anzeige mit der zweiten Farbe hinterleuchtet wird.

Durch dieses Verfahren ist es möglich, im Wesentlichen die gesamte Anzeige zunächst mit der ersten Farbe zu hinterleuchten. Gibt die Steuerungseinrichtung das Signal ab, so wechselt das in den zweiten Lichtleiter eingekoppelte Licht seine Farbe, d.h. die Anzeige wird im Bereich des zweiten Lichtleiters mit der zweiten Farbe hinterleuchtet. Aufgrund der beiden Lichtleiter, die bevorzugt durch eine lichtundurchlässige und/oder lichtreflektierende von einander entkoppelt sind, stört jedoch die zweite Farbe den vom ersten Lichtleiter hinterleuchteten Bereich der Anzeige nicht oder nur kaum. Der von dem zweiten Lichtleiter hinterleuchtete Bereich der Anzeige ist beispielsweise einem Warnsignal zugeordnet, sodass die Steuerungseinrichtung das Signal abgibt, wenn ein Fahrzeuglenker bzw. eine Fahrzeuglenkerin des Kraftfahrzeugs gewarnt werden soll. Der von dem zweiten Lichtleiter hinterleuchtete Bereich der Anzeige wird daraufhin mit der zweiten Farbe, z.B. Rot, hinterleuchtet.

Mit der erfindungsgemäßen Anzeigevorrichtung wird somit u.a. ein Display mit einer Hinterleuchtung bereitgestellt, das mit Licht hinterleuchtet wird, das in die beiden Lichtleiter eingekoppelt wird und von diesem hinter der Anzeige, z.B. dem Glas eines Flüssigkristallbildschirms, abgegeben wird. Das Display umfasst mehrere Beleuchtungszonen, die jeweils von einem der beiden Lichtleiter hinterleuchtet werden. Die Lichtleiter sind direkt nebeneinander gefügt. Um die Gefahr eines Lichtübertritts von einem Lichtleiter zum anderen Lichtleiter zu vermeiden, wird bevorzugt an der Trennfläche der beiden Lichtleiter die dünne lichtdurchlässige oder lichtreflektierende Schicht eingefügt. Dies erlaubt insbesondere folgende Nutzung:

Das gesamte Display kann komplett mit seiner üblichen Hinterleuchtungsfarbe genutzt werden. Dazu wird in den beiden Lichtleitern zunächst Licht mit derselben Farbe eingekoppelt. Das gesamte Display wird dann im Wesentlichen mit dieser Farbe hinterleuchtet. Wenn eine Warnanzeige z.B. in der Farbe Rot dargestellt werden soll, wird das zugehörige Symbol in dem Bereich des zweiten Lichtleiters erzeugt. Nur in diesem Bereich wird dann die rote anstelle der gelben Hinterleuchtung aktiviert, indem in den zweiten Lichtleiter ein rotes Licht eingekoppelt wird.

Da die Trennfläche zwischen den beiden Lichtleitern relativ dünn ausgeführt werden kann, wird das Display im Wesentlichen über die gesamte Fläche gleichmäßig hinterleuchtet, wenn in beiden Lichtleitern ein Licht derselben Farbe eingekoppelt wird. Die Trennfläche kann insbesondere dann nicht oder zumindest kaum mit dem Auge erkannt werden, wenn das Display im Wesentlichen mit Blickwinkel senkrecht zur Displayoberfläche betrachtet wird.

Ausführungsbeispiele der Erfindung sind in den beigefügten schematischen Zeichnungen 1-5 exemplarisch dargestellt. Es zeigen:
- Figur 1: Einen Personenkraftwagen mit einer Anzeigevorrichtung,
- Figuren 2 bis 5: verschiedene Ansichten und Betriebszustände der in der Figur 1 gezeigten Anzeigevorrichtung und
- Figur 6: eine weitere nicht erfindungsgemäße Anzeigevorrichtung.

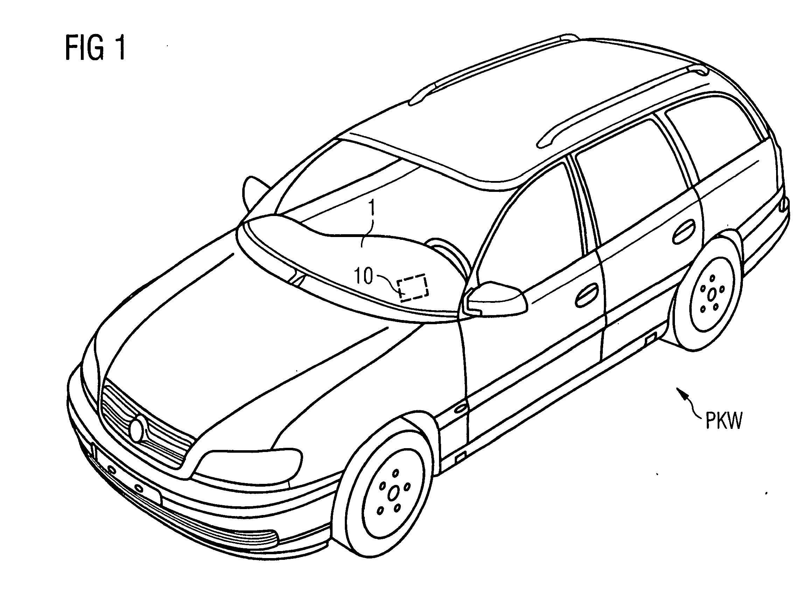

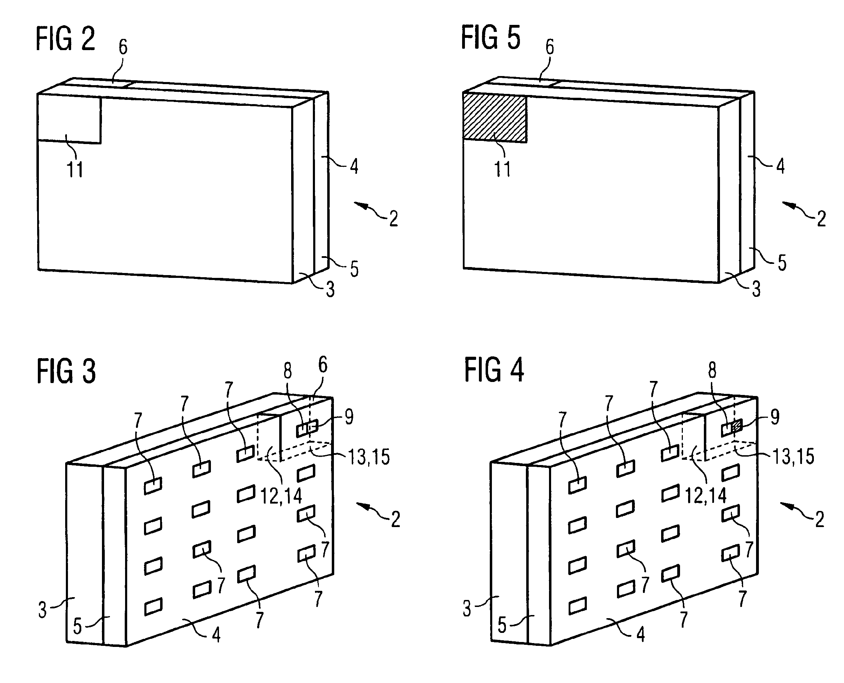

Die Fig. 1 zeigt einen Personenkraftwagen PKW mit einem Armaturenbrett 1, an dem eine in den Figuren 2 bis 5 näher dargestellte Anzeigevorrichtung 2 angeordnet ist. Die Anzeigevorrichtung 2 ist dafür vorgesehen, einen in den Figuren nicht gezeigten Fahrzeuglenker bzw. nicht gezeigte Fahrzeuglenkerin des Personenkraftwagens PKW über Fahrzeugparameter des Personenkraftwagens PKW zu informieren.

Die Anzeigevorrichtung 2 umfasst im Falle des vorliegenden Ausführungsbeispiels einen Flüssigkristallbildschirm 3 als Anzeige und eine direkt auf der Rückseite des Flüssigkristallbildschirms 3 angeordnete Hintergrundbeleuchtung 4 zum Hinterleuchten des Flüssigkristallbildschirmes 3. Die Hintergrundbeleuchtung 4 weist im Falle des vorliegenden Ausführungsbeispieles zwei Lichtleiter 5 und 6 aus Plexiglas auf, die sich gemeinsam im Wesentlichen über die gesamte Fläche der Rückseite des Flüssigkristallbildschirmes 3 erstrecken. Der erste Lichtleiter 5 umfasst matrixförmige Ausnehmungen, in denen im Falle des vorliegenden Ausführungsbeispieles gelbes Licht emittierende gelbe Leuchtdioden 7 angeordnet sind. Der zweite Lichtleiter 6 umfasst eine erste Ausnehmung, in der eine gelbes Licht emittierende gelbe Leuchtdiode 8, und eine zweite Ausnehmung, in der eine rotes Licht emittierende rote Leuchtdiode 9 angeordnet ist.

Die gelben Leuchtdioden 7 des ersten Lichtleiters 5 und die gelbe Leuchtdiode 8 des zweiten Lichtleiters 6 sind in nicht dargestellter Weise mit einer unterhalb des Armaturenbrettes 1 des Personenkraftwagens PKW angeordneten Steuerungsvorrichtung 10 elektrisch verbunden, die die gelben Leuchtdioden 7 und 8 in allgemein bekannter Weise ansteuert. Im Falle des vorliegenden Ausführungsbeispiels kann mittels der Steuerungsvorrichtung 10 die Intensität des emittierenden Lichts der gelben Leuchtdioden 7 und 8 eingestellt bzw. können die gelben Leuchtdioden 7 und 8 ein- und ausgeschaltet werden.

Die rote Leuchtdiode 9 ist im Falle des vorliegenden Ausführungsbeispieles in ebenfalls nicht dargestellter Weise mit der Steuerungsvorrichtung 10 elektrisch verbunden. Die rote Leuchtdiode 9 ist dafür vorgesehen, ein Warnfeld 11 auf dem Flüssigkristallbildschirm 3 bei Bedarf rot zu hinterleuchten und wird dazu in geeigneter Weise von der Steuerungsvorrichtung 10 angesteuert.

Bei normalem Betrieb ist die rote Leuchtdiode 9 ausgeschaltet. Bei eingeschalteter Hintergrundbeleuchtung 4 und normalem Betrieb steuert die Steuerungsvorrichtung 10 nur die gelben Leuchtdioden 7 und 8 an, die gelbes Licht in die beiden Lichtleiter 5 und 6 einkoppeln. Die beiden Lichtleiter 5 und 6 haben eine derart große flächenhafte Ausdehnung und sind derart nahe aneinander angeordnet, dass durch das in die beiden Lichtleiter 5 und 6 eingekoppelte Licht der gelben Leuchtdioden 7 und 8 der Flüssigkristallbildschirm 3 im Wesentlichen komplett flächenhaft gelb hinterleuchtet wird, d.h. es wird auch das Warnfeld 11 des Flüssigkristallbildschirmes 3 gelb hinterleuchtet. Dies ist in den Figuren 2 und 3 angedeutet.

Tritt eine vorgegebene Situation ein, über die ein in den Figuren nicht gezeigter Fahrzeuglenker bzw. eine nicht gezeigte Fahrzeuglenkerin mit dem Warnfeld 11 informiert werden soll, so schaltet die Steuerungsvorrichtung 10 zusätzlich zu den gelben Leuchtdioden 7 und 8 die rote Leuchtdiode 9 an, die daraufhin rotes Licht in den zweiten Lichtleiter 6 der Hintergrundbeleuchtung 4 einkoppelt. Dies ist in der Fig. 4 angedeutet. Die Intensität der roten Leuchtdiode 9 ist im Falle des vorliegenden Ausführungsbeispieles derart hoch, sodass diese das gelbe Licht der gelben Leuchtdiode 8 des zweiten Lichtleiters 6 überstrahlt, sodass das Warnfeld 11 rot hinterleuchtet wird.

Des Weiteren sind die beiden Lichtleiter 5 und 6 an denjenigen Grenzflächen 12 und 13, mit denen sich die beiden Lichtleiter 5 und 6 berühren, mit jeweils einer dünnen lichtundurchlässigen Schicht 14 und 15, die im Falle des vorliegenden Ausführungsbeispieles mittels Farbdruck auf den ersten Lichtleiter 5 aufgebracht wurden, entkoppelt. Dadurch wird verhindert, dass rotes Licht der roten Leuchtdiode 9 von dem zweiten Lichtleiter 6 in den ersten Lichtleiter 5 eingekoppelt wird. Derjenige Teil des Flüssigkristallbildschirmes 3, der nicht das Warnfeld 11 umfasst, wird daher bei eingeschalteter roter Leuchtdiode 9 durch die gelben Leuchtdioden 7 des ersten Lichtleiters hinterleuchtet ohne durch das rotes Licht der roten Leuchtdiode 9 gestört zu werden. Ein Überleuchten des roten Lichtes der roten Leuchtdiode 9 außerhalb dem dem Warnfeld 11 zugeordneten Bereich der Flüssigkristallanzeige 3 wird somit vermieden. Dies ist in der Fig. 5 angedeutet.

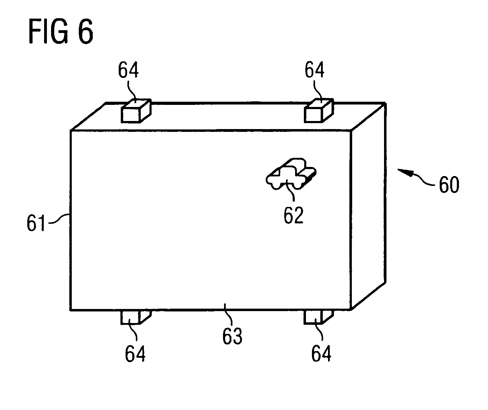

Die Figur 6 zeigt eine weitere nicht erfindungsgemäße Anzeigevorrichtung 60, die anstelle der in den Figuren 2 bis 5 gezeigten Anzeigevorrichtung 2 in den Personenkraftwagen PKW eingebaut werden kann.

Die Anzeigevorrichtung 60 umfasst im Falle des vorliegenden nicht erfindungsgemäßen Beispiels zwei Lichtleiter 61 und 62 aus Plexiglas. Der Lichtleiter 61 hat im Wesentlichen die Form eines Rechtecks, in das ein Stück Plexiglas, das im Falle des vorliegenden nicht erfindungsgemäßen Beispiels die Form eines Personenkraftwagens hat, herausgestanzt wurde. In das durch das herausgestanzte Stücke Plexiglas entstandene Loch ist der zweiter Lichtleiter 62 in Form eines Personenkraftwagens angeordnet.

Die beiden Lichtleiter 61 und 62 sind an derjenigen Grenzfläche, mit der sich die beiden Lichtleiter 61 und 62 berühren, mit einer dünnen lichtundurchlässigen Schicht, die im Falle des vorliegenden nicht erfindungsgemäßen Beispieles mittels Farbdruck auf den Lichtleiter 61 aufgebracht wurden, entkoppelt. Die beiden Lichtleiter 61 und 62 sind ferner derart nahe aneinander angeordnet, dass im Wesentlichen eine durchgängige Anzeigefläche 63 entsteht. Die durch Farbdruck aufgebracht lichtdurchlässige Schicht ist so dünn, dass sie bei rechwinkliger Blickrichtung kaum erkennbar ist.

Die in der Figur 6 dargestellte nicht erfindungsgemäße Anzeigevorrichtung 60 umfasst außerdem gelb leuchtende gelbe Leuchtdioden 64, die gelbes Licht in den Lichtleiter 61 einkoppeln. Die gelben Leuchtdioden 64 sind in nicht dargestellter Weise mit der Steuerungsvorrichtung 10 elektrisch verbunden und werden von dieser in geeigneter Weise angesteuert. Bei eingeschalteten gelben Leuchtdioden 64 leuchtet der dem Lichtleiter 61 zugeordnete Teil der Anzeigeoberfläche 63 gelb.

Die in der Figur 6 gezeigte nicht erfindungsgemäße Anzeigevorrichtung 60 umfasst ferner eine in der Figur 6 nicht dargestellte rot leuchtende rote Leuchtdiode, die mit dem Lichtleiter 62 in Form des Personenkraftwagens gekoppelt ist. Die rote Leuchtdiode ist im Falle des vorliegenden Ausführungsbeispiels ebenfalls mit der Steuerungsvorrichtung 10 elektrisch verbunden und wird von dieser angesteuert. Dadurch wird ein roter Personenkraftwagen auf einem gelben Hintergrund auf der Anzeigeoberfläche 61 der Anzeigevorrichtung 6 angezeigt.

Obwohl die vorliegende Erfindung anhand bevorzugter Ausführungsbeispiele beschrieben wurde, ist die Erfindung nicht auf diese beschränkt, sondern auf vielfältige Weise modifizierbar. Insbesondere sind die gewählten Farben der gelben und der roten Leuchtdioden nur exemplarisch zu verstehen. Außerdem können die beiden Lichtleiter 5 und 6 auch durch andere Methoden voneinander entkoppelt sein, beispielsweise durch eine lichtreflektierende Schicht oder eine dünnen Folie. Auch ist es nicht notwendig, dass die beiden Lichtleiter recheckförmig sind. Insbesondere ist es möglich, dass weingstens einer der beiden Lichtleiter die Form eine Symbols hat, sodass auf dem Flüssigkristallbildschirm ein Symbol mit einer Farbe, die sich von der Farbe restlichen Hintergrundbeleuchtung unterscheidet, erscheint.

### Bezugszeichenliste

- 1: Armaturenbrett
- 2: Anzeigevorrichtung
- 3: Flüssigkristallbildschirm
- 4: Hintergrundbeleuchtung
- 5: erster Lichtleiter
- 6: zweiter Lichtleiter
- 7: gelbe Leuchtdioden
- 8: gelbe Leuchtdiode
- 9: rote Leuchtdiode
- 10: Steuerungsvorrichtung
- 11: Warnfeld
- 12, 13: Grenzfläche
- 14, 15: lichtdurchlässige Schicht
- 60: Anzeigevorrichtung
- 61, 62: Lichtleiter
- 63: Anzeigeoberfläche
- 64: gelbe Leuchtdioden

- PKW: Personenkraftwagen

## Patentansprüche

1. Anzeigevorrichtung, aufweisend eine monochrome Anzeige (3) und eine für ein Hinterleuchten der Anzeige (3) vorgesehene Hintergrundbeleuchtung (4), die eine Licht mit einer ersten Farbe abgebende erste Lichtquelle (7), eine Licht mit einer von der ersten Farbe verschiedenen zweiten Farbe abgebende zweite Lichtquelle (9), einen mit der ersten Lichtquelle (7) gekoppelten ersten Lichtleiter (5) und einen mit der zweiten Lichtquelle (9) gekoppelten zweiten Lichtleiter (6) aufweist, **dadurch gekennzeichnet, dass** die Anzeigevorrichtung eine Licht mit der ersten Farbe abgebende dritte Lichtquelle (8) aufweist, die ebenfalls mit dem zweiten Lichtleiter (6) gekoppelt ist, dass die beiden Lichtleiter (5, 6) derart dicht nebeneinander hinter der Anzeige (3) der Anzeigevorrichtung (2) angeordnet sind, dass sie die gesamte Anzeige (3) flächenhaft hinterleuchten, und dass sie einen dem ersten Lichtleiter (5) zugeordneten Bereich der Anzeige (3) ausschließlich mit Licht der ersten Farbe und einen dem zweiten Lichtleiter (6) zugeordneten Bereich (11) der Anzeige (3) umschaltbar entweder mit Licht der ersten Farbe oder mit Licht der zweiten Farbe hinterleuchten.

2. Anzeigevorrichtung nach Anspruch 1, bei der die beiden Lichtleiter (5, 6) durch eine lichtundurchlässige (14, 15) und/oder lichtreflektierende Schicht voneinander getrennt sind.

3. Anzeigevorrichtung nach Anspruch 2, bei der die Schicht (14, 15) eine dünne Folie ist oder mittels Farbdruck aufgebracht wird.

4. Anzeigevorrichtung nach einem der Ansprüche 1 bis 3, bei der die Anzeigeoberfläche ein Flüssigkristallbildschirm (3) ist.

5. Anzeigenvorrichtung nach einem der Ansprüche 1 bis 4, bei der wenigstens einer der Teillichtleiter die Form eines Symbols hat.

6. Kraftfahrzeug mit einer Anzeigevorrichtung nach einem der Ansprüche 1 bis 5.

7. Verfahren zum Betreiben einer Anzeigevorrichtung (2) eines Kraftfahrzeugs (PKW), aufweisend Einkoppeln von Licht in einen ersten Lichtleiter (5) und in einen zweiten Lichtleiter (6), die derart dicht nebeneinander hinter einer Anzeige (3) der Anzeigenvorrichtung (2) angeordnet sind, sodass sie die gesamte Anzeige (3) flächenhaft hinterleuchten, **gekennzeichnet durch**
- Einkoppeln von Licht einer ersten Farbe in den ersten Lichtleiter (5) und in den zweiten Lichtleiter (6), sodass sie die gesamte Anzeige (3) flächenhaft mit der ersten Farbe hinterleuchten, und
- Wechseln der Farbe des eingekoppelten Lichts in den zweiten Lichtleiter (6) von der ersten Farbe auf eine von der ersten Farbe verschiedenen zweiten Farbe aufgrund eines von einer Steuereinrichtung (10) des Fahrzeugs (PKW) abgegebenen Signals, sodass ein dem ersten Lichtleiter (3) zugeordnete Bereich (11) der Anzeige (3) mit der ersten Farbe und ein dem zweiten Lichtleiter zugeordneter Bereich der Anzeige mit der zweiten Farbe hinterleuchtet wird.

8. Verfahren nach Anspruch 7, bei dem die beiden Lichtleiter (5, 6) durch eine lichtundurchlässige (14, 15) und/oder lichtreflektierende Schicht voneinander getrennt sind.

9. Verfahren nach Anspruch 7 oder 8, bei dem die Schicht (14, 15) eine dünne Folie ist oder mittels Farbdruck aufgebracht wird.

10. Verfahren nach einem der Ansprüche 7 bis 9, bei dem die Anzeigeoberfläche ein Flüssigkristallbildschirm (3) ist und/oder bei dem der wenigstens einer der Teillichtleiter die Form eines Symbols hat.

## Claims

1. Display device having a monochrome display (3) and a backlighting means (4), which is provided for illuminating the display (3) from behind and which has a light with a first light source (7) emitting a first colour, a light with a second light source (9) emitting a second colour different from the first colour, a first light guide (5) coupled to the first light source (7) and a second light guide (6) coupled to the second light source (9), **characterised in that** the display device has a light with a third light source (8) emitting the first colour, which is also coupled to the second light guide (6), that the two light guides (5, 6) are arranged so closely adjacent to one another behind the display (3) of the display device (2) that they illuminate the entire display (3) over its surface from behind, and that they illuminate a region of the display (3) associated with the first light guide (5) from behind solely with light of the first colour and a region (11) of the display (3) associated with the second light guide (6) in switchable manner either with light of the first colour or with light of the second colour.

2. Display device according to claim 1, in which the two light guides (5, 6) are separated from one another by an opaque (14, 15) and/or light-reflecting layer.

3. Display device according to claim 2, in which the layer (14, 15) is a thin film or is applied by means of colour printing.

4. Display device according to one of claims 1 to 3, in which the display surface is a liquid crystal screen (3).

5. Display device according to one of claims 1 to 4, in which at least one of the component light guides has the form of a symbol.

6. Motor vehicle with a display device according to one of claims 1 to 5.

7. Method for operating a display device (2) of a motor vehicle (PKW) having light coupled into a first light guide (5) and into a second light guide (6), which are arranged so closely adjacent to one another behind a display (3) of the display device (2) that they illuminate the entire display (3) over its surface from behind, **characterised by**
• coupling light of a first colour into the first light guide (5) and into the second light guide (6), so that they illuminate the entire display (3) over its surface from behind with the first colour, and
• changing the colour of the light coupled into the second light guide (6) from the first colour to a second colour different from the first colour on the basis of a signal emitted by a control means (10) of the vehicle (PKW), so that a region (11) of the display (3) associated with the first light guide (3) is illuminated from behind with the first colour and a region of the display associated with the second light guide is illuminated from behind with the second colour.

8. Method according to claim 7, in which the two light guides (5, 6) are separated from one another by an opaque (14, 15) and/or light-reflecting layer.

9. Method according to claim 7 or 8, in which the layer (14, 15) is a thin film or is applied by means of colour printing.

10. Method according to one of claims 7 to 9, in which the display surface is a liquid crystal screen (3) and/or in which the at least one of the component light guides has the form of a symbol.

## Revendications

1. Dispositif d'affichage, présentant un affichage monochromatique (3) et un éclairage de fond (4) prévu pour rétroéclairer l'affichage (3), lequel éclairage présente une première source de lumière (7) émettant une lumière d'une première couleur, une deuxième source de lumière (9) émettant une lumière d'une seconde couleur différente de la première couleur, un premier conducteur optique (5) couplé à la première source de lumière (7) et un second conducteur optique (6) couplé à la deuxième source de lumière (9), **caractérisé en ce que** le dispositif d'affichage présente une troisième source de lumière (8) émettant une lumière de la première couleur, laquelle source est également couplée au second conducteur optique (6), **en ce que** les deux conducteurs optiques (5, 6) sont agencés de manière compacte derrière l'affichage (3) du dispositif d'affichage (2), de telle sorte qu'ils rétroéclairent de façon surfacique tout l'affichage (3), et **en ce qu'**ils rétroéclairent une zone de l'affichage (3) associée au premier conducteur optique (5) exclusivement avec de la lumière de la première couleur et une zone (11) de l'affichage (3) associée au second conducteur optique (6) de manière commutable soit avec de la lumière de la première couleur soit avec de la lumière de la seconde couleur.

2. Dispositif d'affichage selon la revendication 1, dans lequel les deux conducteurs optiques (5, 6) sont séparés l'un de l'autre par une couche opaque à la lumière (14, 15) et/ou réfléchissant la lumière.

3. Dispositif d'affichage selon la revendication 2, dans lequel la couche (14, 15) est une feuille mince ou est appliquée au moyen d'une impression en couleur.

4. Dispositif d'affichage selon l'une quelconque des revendications 1 à 3, dans lequel la surface d'affichage est un écran à cristaux liquides (3).

5. Dispositif d'affichage selon l'une quelconque des revendications 1 à 4, dans lequel au moins un des sous-conducteurs optiques présente la forme d'un symbole.

6. Véhicule automobile comprenant un dispositif d'affichage selon l'une quelconque des revendications 1 à 5.

7. Procédé de fonctionnement d'un dispositif d'affichage (2) d'un véhicule automobile (PKW), présentant l'étape consistant à injecter de la lumière dans un premier conducteur optique (5) et dans un second conducteur optique (6), qui sont agencés de manière compacte derrière un affichage (3) du dispositif d'affichage (2) de telle sorte qu'ils rétroéclairent de manière surfacique tout l'affichage (3), **caractérisé par** les étapes consistant à :
- injecter de la lumière d'une première couleur dans le premier conducteur optique (5) et dans le second conducteur optique (6), de sorte qu'ils rétroéclairent de manière surfacique tout l'affichage (3) avec la première couleur, et
- remplacer la couleur de la lumière injectée dans le second conducteur optique (6) en passant de la première couleur à une seconde couleur différente de la première couleur sur la base d'un signal délivré par un système de commande (10) du véhicule (PKW), de sorte qu'une zone (11) de l'affichage (3) associée au premier conducteur optique (3) est rétroéclairée par la première couleur et une zone de l'affichage associée au second conducteur optique est rétroéclairée par la seconde couleur.

8. Procédé selon la revendication 7, dans lequel les deux conducteurs optiques (5, 6) sont séparés l'un de l'autre par une couche opaque à la lumière (14, 15) et/ou réfléchissant la lumière.

9. Procédé selon la revendication 7 ou 8, dans lequel la couche (14, 15) est une feuille mince ou est appliquée au moyen d'une impression en couleur.

10. Procédé selon l'une quelconque des revendications 7 à 9, dans lequel la surface d'affichage est un écran à cristaux liquides (3) et/ou dans lequel le au moins un des sous-conducteurs optiques présente la forme d'un symbole.
